# EUROPEAN PATENT APPLICATION

(11) **EP 3 892 963 A1**
(43) Date of publication of application: **13.10.2021**
(21) Application number: 19893565.2
(22) Date of filing: 16.10.2019
(51) Int. Cl.: G01D 5/353, G08G 1/01, G08G 1/09

(54) **ROAD MONITORING SYSTEM, ROAD MONITORING DEVICE, ROAD MONITORING METHOD, AND NON-TRANSITORY COMPUTER-READABLE MEDIUM**

(30) Priority: 03.12.2018 JP 2018226684
(71) Applicant: NEC Corporation, 108-8001 Tokyo (JP)
(72) Inventor: YODA, Yukihide, Tokyo 108-8001 (JP); AONO, Yoshiaki, Tokyo 108-8001 (JP)
(74) Representative: Vossius & Partner Patentanwälte Rechtsanwälte mbB
(86) International application number: PCT/JP2019/040696
(87) International publication number: WO 2020/116030

(57) **Abstract**

A road monitoring system according to the present disclosure includes a cable (20) including a communication optical fiber laid on a road (10), a reception unit (331) configured to receive an optical signal from at least one communication optical fiber included in the cable (20), and a detection unit (332) configured to detect, based on the optical signal, a pattern according to a traveling state of a vehicle on the road (10), and detect, based on the detected pattern, a traveling state of a vehicle on the road (10).

## Description

### Technical Field

The present disclosure relates to a road monitoring system, a road monitoring device, a road monitoring method, and a non-transitory computer-readable medium.

### Background Art

In recent years, a system that monitors a traveling state of a vehicle (automobile) on a road by use of an optical fiber has been suggested (e.g., Patent Literature 1).

A technique described in Patent Literature 1 lays an optical fiber under a road, brings two pulses (one pulse is delayed compared to another pulse) into the optical fiber, and detects pulses resulting from the two pulses backscattered at a start point and an end point of a specific section, respectively. In this instance, when a moving vehicle is present in the specific section, a deviation of a frequency property is caused by a pressure change in the specific section. The technique utilizes this and detects a traveling state of a vehicle on a road.

### Citation List

### Patent Literature

[Patent Literature 1] Published Japanese Translation of PCT International Publication for Patent Application, No. 2009-514081

### Summary of Invention

### Technical Problem

However, a technique described in Patent Literature 1 has a problem that, when the above-described deviation is not caused in a specific section, no presence of a moving vehicle can be detected, but detecting whether no vehicle is present or a stationary vehicle is present is difficult.

Thus, an object of the present disclosure is to provide a road monitoring system, a road monitoring device, a road monitoring method, and a non-transitory computer-readable medium that can solve the above-described problem, and detect a traveling state of a vehicle on a road with a high degree of accuracy.

### Solution to Problem

A road monitoring system according to one aspect includes:
a cable including a communication optical fiber laid on a road;
a reception unit configured to receive an optical signal from at least one communication optical fiber included in the cable; and
a detection unit configured to detect, based on the optical signal, a pattern according to a traveling state of a vehicle on the road, and detect, based on the detected pattern according to the traveling state of the vehicle on the road, a traveling state of a vehicle on the road.

A road monitoring device according to one aspect includes:
a reception unit configured to receive an optical signal from at least one communication optical fiber included in a cable laid on a road; and
a detection unit configured to detect, based on the optical signal, a pattern according to a traveling state of a vehicle on the road, and detect, based on the detected pattern according to the traveling state of the vehicle on the road, a traveling state of a vehicle on the road.

A road monitoring method according to one aspect is
a road monitoring method by a road monitoring device, the method including:
receiving an optical signal from at least one communication optical fiber included in a cable laid on a road; and
detecting, based on the optical signal, a pattern according to a traveling state of a vehicle on the road, and detecting, based on the detected pattern according to the traveling state of the vehicle on the road, a traveling state of a vehicle on the road.

A non-transitory computer-readable medium according to one aspect is a non-transitory computer-readable medium that stores a program for causing a computer to execute:
a procedure of receiving an optical signal from at least one communication optical fiber included in a cable laid on a road; and
a procedure of detecting, based on the optical signal, a pattern according to a traveling state of a vehicle on the road, and detecting, based on the detected pattern according to the traveling state of the vehicle on the road, a traveling state of a vehicle on the road.

### Advantageous Effects of Invention

According to the above-described aspects, an advantageous effect that an abnormal state of a road can be detected with a high degree of accuracy can be acquired.

### Brief Description of Drawings

Fig. 1 is a diagram illustrating one example of a configuration of a road monitoring system according to an example embodiment.
Fig. 2 is a diagram illustrating one example of a pattern according to a traveling state of a vehicle on a road, and being used in a method A in the road monitoring system according to the example embodiment.
Fig. 3 is a diagram illustrating one example of a pattern according to a traveling state of a vehicle on a road, and being used in the method A in the road monitoring system according to the example embodiment.
Fig. 4 is a diagram illustrating one example of a pattern according to a traveling state of a vehicle on a road, and being used in the method A in the road monitoring system according to the example embodiment.
Fig. 5 is a diagram illustrating one example of a pattern according to a traveling state of a vehicle on a road, and being used in the method A in the road monitoring system according to the example embodiment.
Fig. 6 is a diagram illustrating one example of a pattern according to a traveling state of a vehicle on a road, and being used in the method A in the road monitoring system according to the example embodiment.
Fig. 7 is a diagram illustrating one example of machine learning by a method C in the road monitoring system according to the example embodiment.
Fig. 8 is a diagram illustrating one example of an application being achievable based on an abnormal state detected by a detection unit according to the example embodiment.
Fig. 9 is a block diagram illustrating one example of a hardware configuration of a computer that achieves a road monitoring device according to the example embodiment.
Fig. 10 is a flowchart illustrating one example of an operation flow of the road monitoring system according to the example embodiment.
Fig. 11 is a diagram illustrating one example of a road monitoring system according to another example embodiment.
Fig. 12 is a diagram illustrating another example of the road monitoring system according to the another example embodiment.
Fig. 13 is a diagram illustrating one example of arrangement of a fiber sensing unit in the road monitoring system according to the another example embodiment.
Fig. 14 is a diagram illustrating another example of arrangement of the fiber sensing unit in the road monitoring system according to the another example embodiment.
Fig. 15 is a diagram illustrating yet another example of arrangement of the fiber sensing unit in the road monitoring system according to the another example embodiment.
Fig. 16 is a diagram illustrating yet another example of arrangement of the fiber sensing unit in the road monitoring system according to the another example embodiment.
Fig. 17 is a diagram illustrating one example of an operation of the fiber sensing unit during breaking of an optical fiber cable in the road monitoring system in Fig. 13.
Fig. 18 is a diagram illustrating one example of an operation of the fiber sensing unit during breaking of an optical fiber cable in the road monitoring system in Fig. 14.
Fig. 19 is a diagram illustrating one example of an operation of the fiber sensing unit during breaking of an optical fiber cable in the road monitoring system in Fig. 16.

### Description of Embodiments

Hereinafter, an example embodiment according to the present disclosure is described with reference to the drawings.

### <Example Embodiment>

### <Configuration of Example Embodiment>

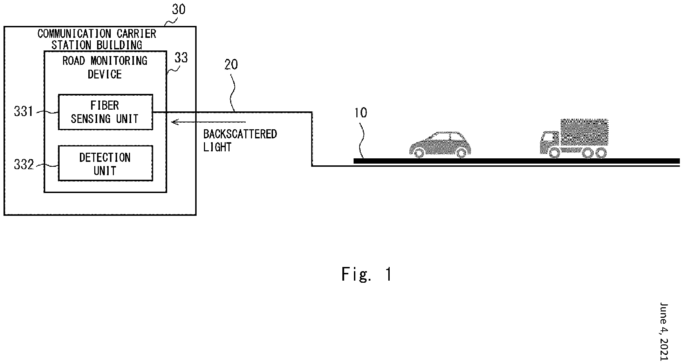

First, a configuration of a road monitoring system according to the present example embodiment is described with reference to Fig. 1.

As illustrated in Fig. 1, the road monitoring system according to the present example embodiment detects a traveling state of a vehicle on a road 10, and includes an optical fiber cable 20 and a road monitoring device 33.

The optical fiber cable 20 is laid along the road 10. Although the optical fiber cable 20 is laid under the road 10 in Fig. 1, the present disclosure is not limited to this, and the optical fiber cable 20 may be laid on a side or the like of the road 10. In this instance, regarding a position of the road 10 where a traveling state in particular is desired to be detected, the optical fiber cable 20 may be densely placed, for example, by laying the optical fiber cable 20 while forming a loop. This can improve detection accuracy of a traveling state of a vehicle on the road 10.

The optical fiber cable 20 is a cable configured by covering one or more communication optical fibers, and has one end routed to inside of a communication carrier station building 30.

The road monitoring system according to the present example embodiment detects a traveling state of a vehicle on the road 10 by utilizing an optical fiber sensing technique that uses an optical fiber as a sensor.

Specifically, inside the communication carrier station building 30, pulsed light is brought into a communication optical fiber included in the optical fiber cable 20. Accordingly, backscattered light is generated for each transmission distance as the pulsed light is transmitted through the communication optical fiber in a direction of the road 10. The backscattered light returns to inside of the communication carrier station building 30 by way of the same communication optical fiber.

Herein, the road 10 vibrates due to traveling of a vehicle, and the vibration of the road 10 is transmitted to a communication optical fiber. A collision sound is generated on the road 10 when an accident or the like occurs, and a change in sound is also transmitted to the communication optical fiber. Thus, in the communication optical fiber, a pattern of transmitting vibration of the road 10 and a sound differs depending on a traveling state (e.g., a traveling direction, a traveling speed, acceleration and deceleration, the number of traveling vehicles, a traveling interval, an overloaded vehicle, an accident, and the like) of a vehicle on the road 10.

Thus, backscattered light returning to inside of the communication carrier station building 30 includes a pattern according to a traveling state of a vehicle on the road 10.

The road monitoring system according to the present example embodiment detects a traveling state (e.g., a traveling direction, a traveling speed, acceleration and deceleration, the number of traveling vehicles, a traveling interval, an overloaded vehicle, an accident, and the like) of a vehicle on the road 10 by utilizing a fact that backscattered light returning to inside of the communication carrier station building 30 includes a pattern according to a traveling state of a vehicle on the road 10.

Herein, the above-described road monitoring device 33 is provided inside the communication carrier station building 30. The road monitoring device 33 is equipment newly placed for achievement of the present example embodiment.

The road monitoring device 33 is a device including a function as optical fiber sensing equipment, and also including a function of detecting a traveling state of a vehicle on the road 10. Specifically, the road monitoring device 33 includes a fiber sensing unit 331 and a detection unit 332. The fiber sensing unit 331 is one example of a reception unit.

The fiber sensing unit 331 brings pulsed light into at least one communication optical fiber included in the optical fiber cable 20. The pulsed light is transmitted in a direction of the road 10. The fiber sensing unit 331 receives backscattered light to the pulsed light, from the same communication optical fiber as the communication optical fiber which the pulsed light is brought into. The backscattered light is received from a direction of the road 10.

In this instance, as described above, the backscattered light received by the fiber sensing unit 331 includes a pattern according to a traveling state of a vehicle on the road 10. In the example of Fig. 1, the fiber sensing unit 331 receives, in a time-series manner, backscattered light generated at various positions of the road 10.

Thus, when receiving backscattered light, the fiber sensing unit 331 first specifies a position of the road 10 where the backscattered light is generated. Further, the fiber sensing unit 331 detects a state of vibration, a state of temperature, a state of a sound, and the like at the specified position.

After this, the detection unit 332 detects a pattern according to a traveling state of a vehicle on the road 10, based on a processing result of the backscattered light by the fiber sensing unit 331, and detects a traveling state of the vehicle on the road 10, based on the detected pattern.

Thus, a method of specifying, in the fiber sensing unit 331, a position where backscattered light is generated, when the backscattered light is received is first described below.

In the present example embodiment, the fiber sensing unit 331 specifies a generation position where backscattered light is generated, based on a time difference between a time when pulsed light is brought into a communication optical fiber, and a time when the backscattered light is received from the same communication optical fiber. In this instance, the fiber sensing unit 331 specifies a generation position in such a way that the generation position is closer from the fiber sensing unit 331 as the above-described time difference is smaller.

Now, a method of detecting, in the detection unit 332, a traveling state of a vehicle on the road 10 is described below.

### (A) Method A

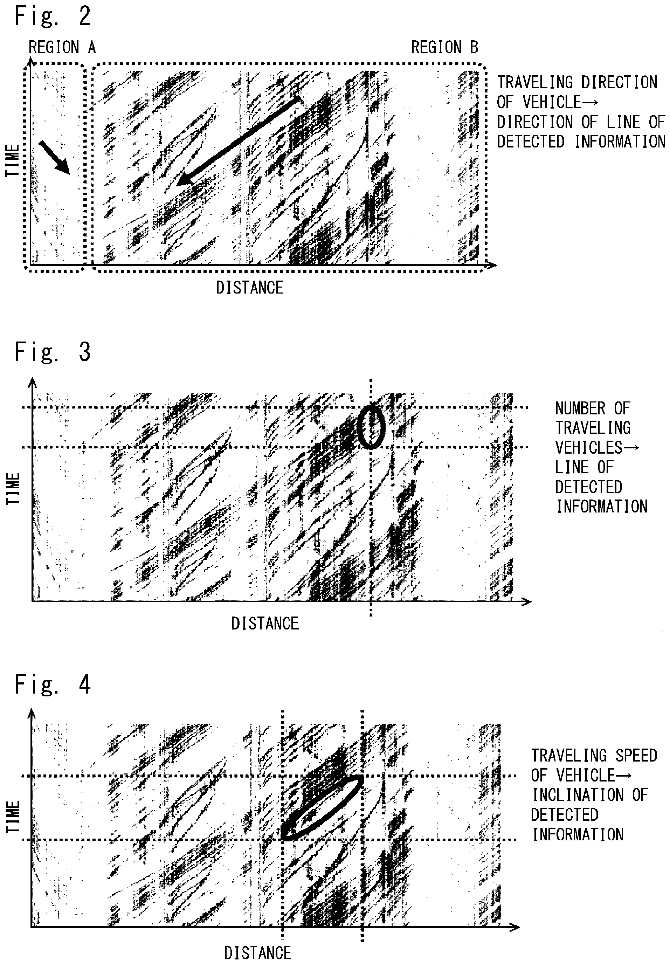

First, a method A of detecting a traveling state of a vehicle on the road 10 is described with reference to Figs. 2 to 6. Figs. 2 to 6 are diagrams each illustrating one example of a pattern according to a traveling state of a vehicle on the road 10.

The fiber sensing unit 331 performs processing of specifying a position of the road 10 where backscattered light received from a communication optical fiber is generated. Further, the fiber sensing unit 331 performs processing of detecting a state of vibration, a state of temperature, a state of a sound, and the like at the specified position of the road 10, by detecting the backscattered light with a distributed acoustic sensor, a distributed vibration sensor, a distributed temperature sensor, or the like.

Thus, the detection unit 332 detects a pattern according to a traveling state of a vehicle on the road 10, based on a processing result of the backscattered light by the fiber sensing unit 331. Specifically, the detection unit 332 detects a pattern according to a traveling state of a vehicle on the road 10, as illustrated in each of Figs. 2 to 6.

A pattern according to a traveling state of a vehicle on the road 10 illustrated in each of Figs. 2 to 6 is described below in detail. Note that patterns themselves are similar in Figs. 2 to 6.

In each of Figs. 2 to 6, a horizontal axis indicates a distance from the fiber sensing unit 331, and a vertical axis indicates an elapsed time. When a vehicle travels, and vibration of the vehicle is detected by the fiber sensing unit 331, traveling of the vehicle is represented on a graph by a line. For example, traveling of the vehicle along with elapse of time is obliquely represented on a graph by one line. Hereinafter, this line is referred to as a "line of detected information". A traveling direction of a vehicle, a traveling speed, acceleration and deceleration, the number of traveling vehicles, a traveling interval, and the like can be detected based on a line of detected information.

For example, as illustrated in Fig. 2, a traveling direction of a vehicle can be detected based on a direction of a line of detected information. In the example of Fig. 2, a vehicle in a region A and a vehicle in a region B differ in traveling direction.

As illustrated in Fig. 3, the number of traveling vehicles can be detected based on the number of lines of detected information in a region surrounded by a circle.

As illustrated in Fig. 4, a traveling speed of a vehicle can be detected based on an inclination of a line of detected information in a region surrounded by a circle.

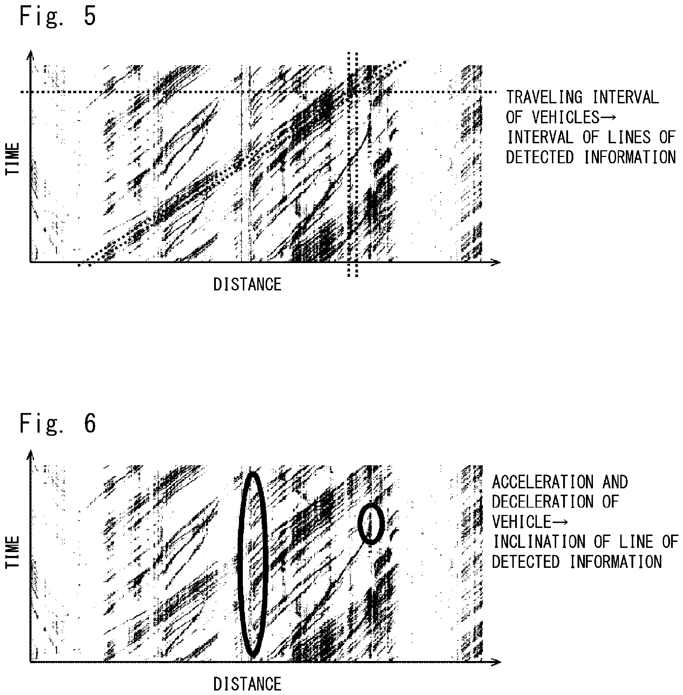

As illustrated in Fig. 5, a traveling interval of vehicles can be detected based on an interval of a plurality of obliquely represented lines of detected information.

As illustrated in Fig. 6, acceleration and deceleration of a vehicle can be detected based on an inclination of a line of detected information in a region surrounded by a circle.

Thus, when detecting a traveling state of a vehicle on the road 10, the detection unit 332 first detects a pattern according to a traveling state of the vehicle on the road 10, as illustrated in each of Figs. 2 to 6. Then, the detection unit 332 detects a traveling state of the vehicle on the road 10, by the method each described with Figs. 2 to 6. The detection unit 332 may detect traveling states of a plurality of vehicles on the road 10 by the method described with each of Figs. 2 to 6. When detecting traveling states of a plurality of vehicles on the road 10, the detection unit 332 may further detect a traffic state (e.g., congestion information, closure information, and the like) of the road 10, may detect occurrence of dangerous driving or a violation (e.g., a sudden stop, tailgating driving, driving in a wrong direction, overspeed, and the like) on the road 10, or may specify a cause of an accident occurring on the road 10.

### (B) Method B

Now, a method B of detecting a traveling state of a vehicle on the road 10 is described.

In the present method B, the detection unit 332 detects a traveling state of a vehicle on the road 10 by use of an association table.

The detection unit 332 saves an association table associating a pattern according to a traveling state of a vehicle on the road 10 with a traveling state of the vehicle on the road 10. The pattern according to a traveling state of the vehicle is, for example, a pattern as illustrated in each of Figs. 2 to 6 described in the above-described method A.

When detecting a traveling state of a vehicle on the road 10, the detection unit 332 first detects a pattern according to a traveling state of the vehicle on the road 10. Then, the detection unit 332 specifies a traveling state of the vehicle on the road 10 that is associated with the pattern according to a traveling state of the vehicle on the road 10 acquired above, by use of the above-described association table. The association table may be an association table associating traveling states of a plurality of vehicles on the road 10, with the above-described pattern. The association table may be an association table associating a traffic state of the road 10, occurrence of dangerous driving or a violation on the road 10, or a cause of an accident occurring on the road 10, with the above-described pattern.

### (C) Method C

Now, a method C of detecting a traveling state of a vehicle on the road 10 is described.

In the present method C, the detection unit 332 performs machine learning (e.g., deep-learning or the like) of a pattern according to a traveling state of a vehicle on the road 10, and detects a traveling state of the vehicle on the road 10 by use of a learning result (initial training model) of the machine learning.

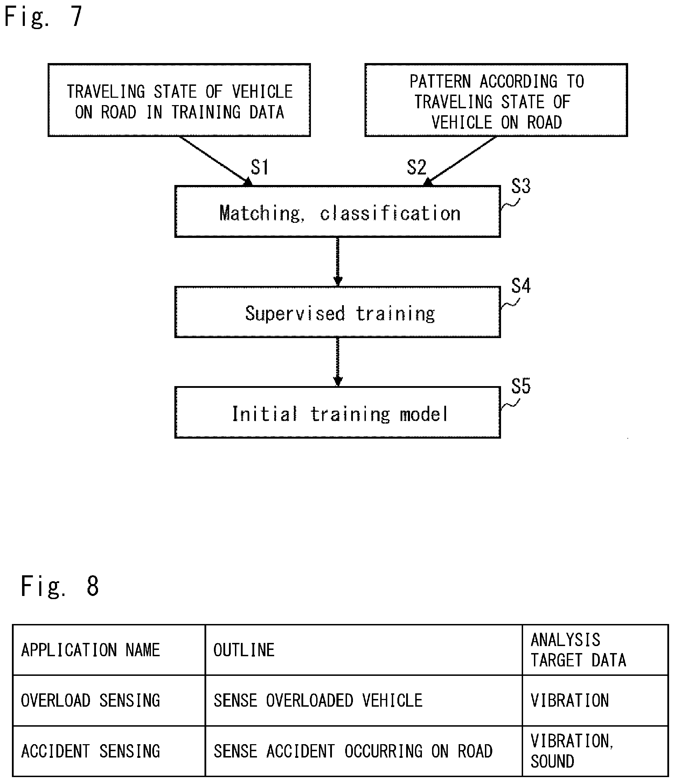

First, a method of machine learning in the present method C is described with reference to Fig. 7.

As illustrated in Fig. 7, the detection unit 332 inputs supervised data indicating a traveling state of a vehicle on the road 10, and a pattern according to a traveling state of the vehicle on the road 10 (steps S1 and S2). The pattern according to a traveling state of the vehicle is, for example, a pattern as illustrated in each of Figs. 2 to 6 described in the above-described method A.

Then, the detection unit 332 performs matching and classification of the supervised data and the pattern (step S3), and performs supervised training (step S4). Thus, an initial training model is acquired (step S5). The initial training model is a model in which, when a pattern according to a traveling state of a vehicle on the road 10 is input, a traveling state of the vehicle is output.

Now, a method of detecting a traveling state of a vehicle on the road 10 in the present method C is described.

When detecting a traveling state of a vehicle on the road 10, the detection unit 332 first detects a pattern according to a traveling state of the vehicle on the road 10, as in the above-described method A. Then, the detection unit 332 inputs the pattern to an initial training model. Consequently, the detection unit 332 acquires a traveling state of the vehicle as an output result of the initial training model. The learning model may be a learning model in which, when the above-described pattern is input, traveling states of a plurality of vehicles on the road 10 are output. The learning model may be a learning model in which, when the above-described pattern is input, a traffic state of the road 10, an occurrence state of dangerous driving or a violation on the road 10, or a cause of an accident occurring on the road 10 is output.

As described above, in the present method C, machine learning is performed for a pattern according to a traveling state of a vehicle on the road 10, and a traveling state of the vehicle on the road 10 is detected by use of a learning result of the machine learning.

Extracting a feature for detecting a traveling state of a vehicle on the road 10 from data may be difficult by human analysis. In the present method C, a traveling state of a vehicle on the road 10 can be detected with a high degree of accuracy by constructing a learning model from a large amount of patterns, even when detection is difficult by human analysis.

Note that, in machine learning in the present method C, a learning model may be generated in an initial state, based on two or more pieces of supervised data. The learning model may be caused to newly learn a newly detected pattern. In this instance, a detailed condition of detecting a traveling state of a vehicle on the road 10 from the new learning model may be adjusted.

Now, an application being achievable based on a traveling state of a vehicle on the road 10 detected by the detection unit 332 is described below with reference to Fig. 8.

For example, applications of (a) and (b) below are achievable based on a traveling state of a vehicle on the road 10 detected by the detection unit 332. Each of the applications is described below.

### (a) Overload sensing

### Problem and advantageous effect:

When a vehicle traveling on the road 10 is loaded with freight beyond a prescribed deadweight, deterioration of a road surface is caused by traveling of the vehicle.

Since overload involves a risk of an accident due to falling of a vehicle, there is a demand for a desire to prevent entrance of an overloaded vehicle into an expressway in order to ensure security and a safe road environment.

### Operation outline:

Vibration generated on the road 10 when an overloaded vehicle travels is monitored via the optical fiber cable 20 laid under the road 10. The overloaded vehicle is sensed by a feature of a pattern of the vibration.

### (b) Accident sensing

### Problem and advantageous effect:

Remotely sensing occurrence of an accident in real time becomes possible by monitoring the whole region of the road 10 via the optical fiber cable 20.

### Operation outline:

A sound generated on the road 10 is monitored, and is sensed as an accident when the monitored sound is a collision sound.

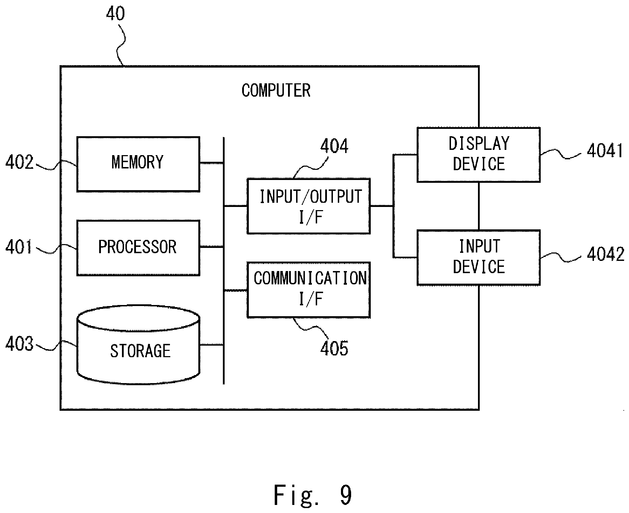

Now, a hardware configuration of a computer 40 that achieves the road monitoring device 33 is described below with reference to Fig. 9.

As illustrated in Fig. 9, the computer 40 includes a processor 401, a memory 402, a storage 403, an input/output interface (input/output I/F) 404, a communication interface (communication I/F) 405, and the like. The processor 401, the memory 402, the storage 403, the input/output interface 404, and the communication interface 405 are connected by a data transmission path for mutually transmitting and receiving data.

The processor 401 is, for example, an arithmetic processing device such as a central processing unit (CPU) or a graphics processing unit (CPU). The memory 402 is, for example, a memory such as a random access memory (RAM) or a read only memory (ROM). The storage 403 is, for example, a storage device such as a hard disk drive (HDD), a solid state drive (SSD), or a memory card. The storage 403 may be a memory such as a RAM or a ROM.

The storage 403 stores programs that achieve functions of the fiber sensing unit 331 and the detection unit 332 included in the road monitoring device 33. The processor 401 achieves each of the functions of the fiber sensing unit 331 and the detection unit 332 by executing each of the programs. Herein, when executing each of the above-described programs, the processor 401 may execute the programs after reading the programs onto the memory 402, or may execute the programs without reading the programs onto the memory 402. The memory 402 and the storage 403 also serve to store information and data saved in the fiber sensing unit 331 and the detection unit 332.

The above-described program can be stored by use of various types of non-transitory computer-readable media, and supplied to a computer (including the computer 40). The non-transitory computer-readable media include various types of tangible storage media. Examples of the non-transitory computer-readable media include a magnetic recording medium (e.g., a flexible disk, a magnetic tape, and a hard disk drive), a magneto-optical recording medium (e.g., a magneto-optical disk), a compact disc-read only memory (CD-ROM), a CD-recordable (CD-R), a CD-rewritable (CD-R/W), a semiconductor memory (e.g., a mask ROM, a programmable ROM (PROM), an erasable PROM (EPROM), a flash ROM, and a random access memory (RAM)). The program may be supplied to a computer by various types of transitory computer readable media. Examples of the transitory computer readable media include an electric signal, an optical signal, and an electromagnetic wave. The transitory computer readable medium can supply a program to a computer via a wired communication path such as an electric wire or an optical fiber, or a wireless communication path.

The input/output interface 404 is connected to a display device 4041, an input device 4042, and the like. The display device 4041 is a device, such as a liquid crystal display (LCD) or a cathode ray tube (CRT) display, that displays a screen being related to drawing data processed by the processor 401. The input device 4042 is a device that accepts an operation input of an operator, and is, for example, a keyboard, a mouth, a touch sensor, or the like. The display device 4041 and the input device 4042 may be integrated, and achieved as a touch panel. Note that the computer 40 may have a configuration which also includes a non-illustrated sensor including a decentralized acoustic sensor, a decentralized vibration sensor, and a decentralized temperature sensor, and in which the sensor is connected to the input/output interface 404.

The communication interface 405 transmits and receives data to and from an external device. For example, the communication interface 405 communicates with an external device via a wired communication path or a wireless communication path.

### <Operation of Example Embodiment>

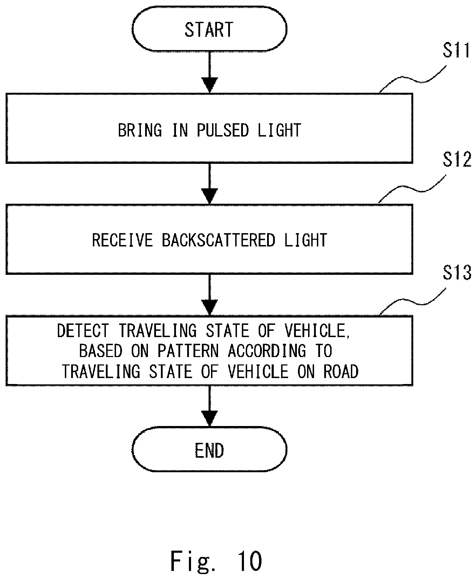

An operation of the road monitoring system according to the example embodiment is described below. Herein, an operation flow of the road monitoring system according to the example embodiment is described below with reference to Fig. 10.

As illustrated in Fig. 10, the fiber sensing unit 331 first brings pulsed light into at least one communication optical fiber included in the optical fiber cable 20 (step S11).

Then, the fiber sensing unit 331 receives backscattered light from the same communication optical fiber as the communication optical fiber which the pulsed light is brought into (step S12). Further, the fiber sensing unit 331 performs processing of specifying a position of the road 10 where the received backscattered light is generated, processing of detecting a state of vibration, a state of temperature, a state of a sound, and the like at the specified position of the road 10. In this instance, the fiber sensing unit 331 may specify a position where the backscattered light is generated, by use of a method based on the above-described time difference.

Thereafter, the detection unit 332 detects a pattern according to a traveling state of the vehicle on the road 10, based on the backscattered light received in step S12. More specifically, the detection unit 332 detects the pattern, based on a processing result of the backscattered light by the fiber sensing unit 331. After this, the detection unit 332 detects a traveling state of the vehicle on the road 10, based on the detected pattern (step S13). In this instance, the detection unit 332 may detect an abnormal state by use of one of the above-described methods A to C.

Note that, in Fig. 10, the processing in step S13 may be performed each time backscattered light is received in step S12. Alternatively, after a plurality of pieces of backscattered light are received in step S12, the processing in step S13 may be performed for each piece of backscattered light. Alternatively, after a plurality of pieces of backscattered light are received in step S12, the processing in step S13 may be performed by use of all the received pieces of backscattered light.

### <Advantageous effect of Example Embodiment>

As described above, according to the present example embodiment, backscattered light (an optical signal) is received from at least one communication optical fiber included in the optical fiber cable 20, a pattern according to a traveling state of a vehicle on the road 10 is detected based on the received backscattered light, and a traveling state of the vehicle on the road 10 is detected based on the detected pattern. Thus, a traveling state of a vehicle on the road 10 can be detected with a high degree of accuracy.

According to the present example embodiment, an existing communication optical fiber suffices in order to detect a traveling state of a vehicle on the road 10. Therefore, since a dedicated structure for detecting a traveling state of a vehicle on the road 10 is not needed, a road monitoring system can be less expensively constructed.

According to the present example embodiment, an optical fiber sensing technique that uses an optical fiber as a sensor is utilized. Thus, advantages, such as being not affected by electromagnetic noise, needing no power supply to a sensor, having satisfactory environmental resistance, and facilitation of maintenance, can be acquired.

### <Another Example Embodiment>

Note that, when machine learning is performed for a pattern according to a traveling state of a vehicle on a road 10 by the above-described method C in a detection unit 332, a traveling state of the vehicle is considered to differ depending on an area. For example, a driving state is considered to differ between an urban area and a suburban area. Thus, the detection unit 332 may perform machine learning for each area by use of supervised data according to the area.

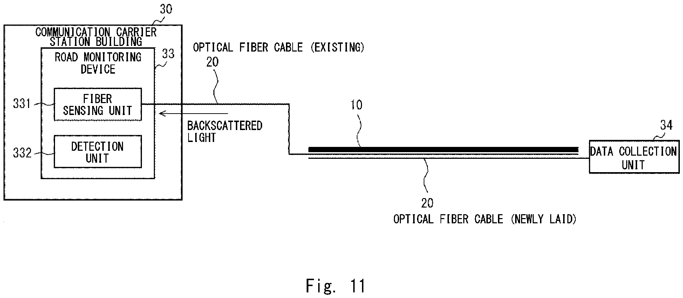

Although the above-described example embodiment supposes use of an existing optical fiber cable 20, an optical fiber cable 20 may be newly provided, and a data collection unit 34 may be connected to the newly provided optical fiber cable 20, as illustrated in Fig. 11. The data collection unit 34 also collects data on a pattern (a sound, temperature, vibration, and the like) of the road 10, and transmits the collected data to the detection unit 332. In this instance, transmission of data from the data collection unit 34 to the detection unit 332 may be performed via the optical fiber cable 20, or may be performed via separately provided wireless equipment. The detection unit 332 detects a traveling state of a vehicle on the road 10, based on data collected by the data collection unit 34 and a fiber sensing unit 331. Thus, detection accuracy can be improved.

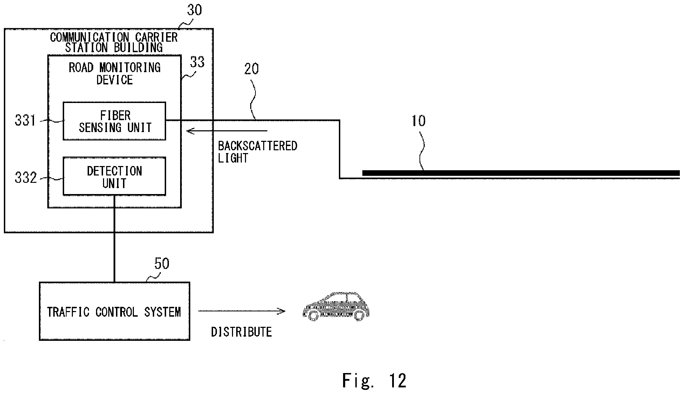

As illustrated in Fig. 12, a traffic control system 50 that manages traffic of a vehicle on the road 10, based on a detection result by a road monitoring device 33 may be provided. The traffic control system 50 is one example of a distribution unit. The traffic control system 50 may distribute a traffic state of the road 10 or occurrence of a violation to a driver of a vehicle via a highway radio, an information board on the road 10, the Internet, an application, or the like. The traffic control system 50 may distribute, to a system manager, a traffic state of the road 10, occurrence of dangerous driving or a violation on the road 10, a cause of an accident occurring on the road 10, or the like. Although the traffic control system 50 is provided outside a communication carrier station building 30, some functions (e.g., a function of a distribution unit or the like) may be provided inside the communication carrier station building 30. When the traffic control system 50 is provided outside the communication carrier station building 30, the road 10 connected to each of a plurality of the communication carrier station buildings 30 by the optical fiber cable 20 may be monitored by one traffic control system 50 in a concentrated way.

The fiber sensing unit 331 and the detection unit 332 of the road monitoring device 33 may be provided apart from each other. For example, only the fiber sensing unit 331 may be provided inside the communication carrier station buildings 30, and the road monitoring device 33 including the detection unit 332 may be provided outside the communication carrier station building 30.

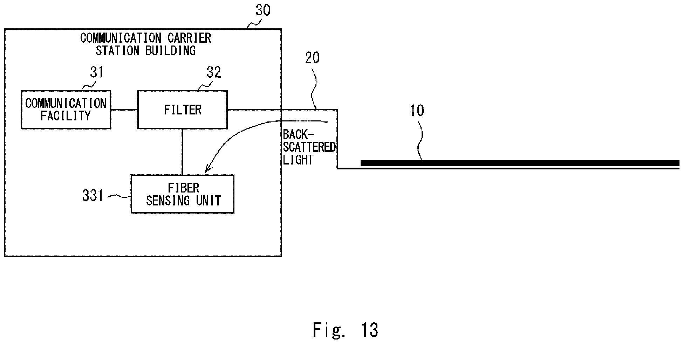

Although only one fiber sensing unit 331 is provided and occupies the optical fiber cable 20 in the above-described example embodiment, the present disclosure is not limited to this. Herein, arrangement of the fiber sensing unit 331 in a road monitoring system according to another example embodiment is described with reference to Figs. 13 to 16. Note that illustration of the detection unit 332 is omitted in Figs. 13 to 16.

In the example of Fig. 13, the fiber sensing unit 331 shares the optical fiber cable 20 with an existing communication facility 31. A filter 32 for signal division is provided in order to share the optical fiber cable 20 between the fiber sensing unit 331 and the existing communication facility 31.

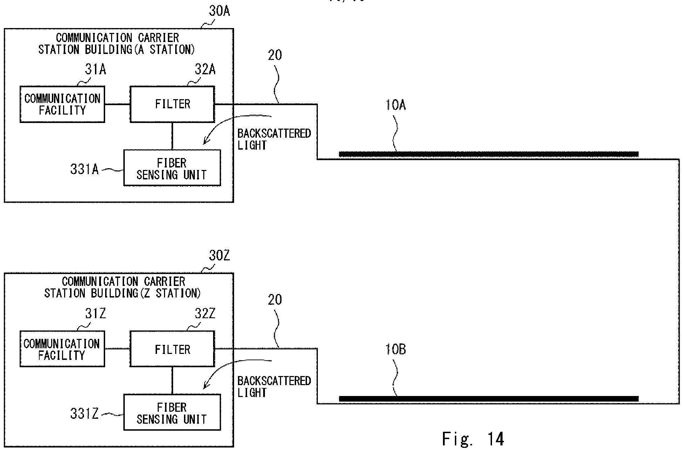

In the example of Fig. 14, one fiber sensing unit 331 is provided in each of a plurality of the communication carrier station buildings 30 (in Fig. 14, two communication carrier station buildings 30A and 30Z). Specifically, fiber sensing units 331A and 331Z are provided inside the communication carrier station buildings 30A and 30Z, respectively. Note that, in the example of Fig. 14, a road 10A is connected to the communication carrier station building 30A by the optical fiber cable 20, a road 10B is connected to the communication carrier station building 30Z by the optical fiber cable 20, and the roads 10A and 10B are connected by the optical fiber cable 20. Communication facilities 31A and 31Z are associated with the communication facility 31, and filters 32A and 32Z are associated with the filter 32.

In the example of Fig. 14, the fiber sensing units 331A and 331Z both monitor the roads 10A and 10B.

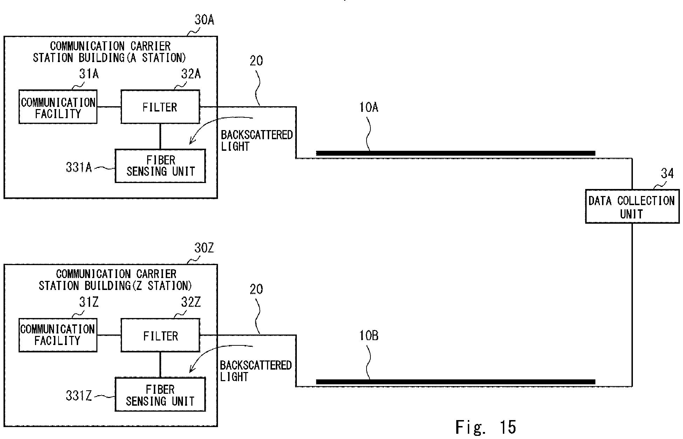

In the example of Fig. 15, the data collection unit 34 is provided near the road 10A, as compared with Fig. 14. Herein, although only one data collection unit 34 is provided for the roads 10A and 10B, it is assumed that one data collection unit 34 is provided for a predetermined number of the roads 10 or for a predetermined road length of the road 10, and one or more data collection units 34 may be provided.

In the example of Fig. 15, each of the data collection units 34 collects data on a pattern (a sound, temperature, vibration, and the like) of the associated road 10, and the detection unit 332 puts together the data collected by each of the data collection units 34. In this instance, transmission of data from each of the data collection units 34 to the detection unit 332 may be performed via the optical fiber cable 20, or may be performed via separately provided wireless equipment. Regarding the road 10 from which data are collected by the data collection unit 34, the detection unit 332 detects a traffic state of a vehicle, based on the data.

Thus, a monitor section of one fiber sensing unit 331 becomes short, and the number of the roads 10 targeted for monitoring or a road length decreases. Since transmission distances of pulsed light and backscattered light become short due to a short monitor section of one fiber sensing unit 331, a fiber loss becomes small. This improves a signal-to-noise ratio (S/N ratio) of backscattered light to be received, and can improve monitoring accuracy. A monitoring period can be improved due to a decrease in the number of the roads 10 targeted for monitoring of the fiber sensing unit 331 or a road length.

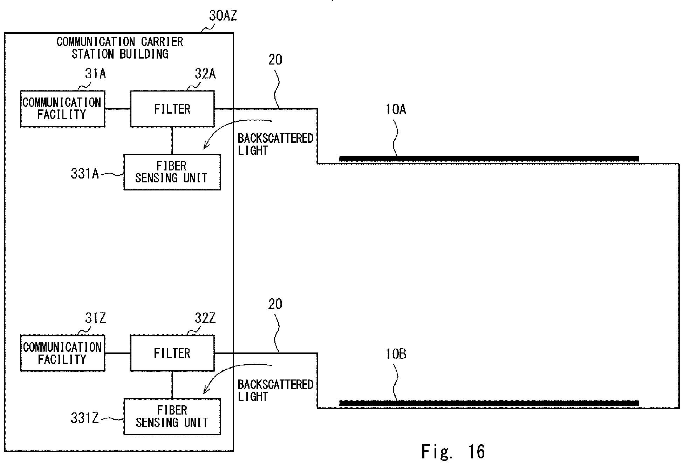

In the example of Fig. 16, one communication carrier station building 30AZ is provided with a plurality of the fiber sensing units 331 (in Fig. 16, two fiber sensing units 331A and 331Z). Note that, in the example of Fig. 16, the road 10A is connected to the fiber sensing unit 331A by the optical fiber cable 20, the road 10B is connected to the fiber sensing units 331Z by the optical fiber cable 20, and the roads 10A and 10B are connected by the optical fiber cable 20. The communication facilities 31A and 31Z are associated with the communication facility 31, and the filters 32A and 32Z are associated with the filter 32.

In the example of Fig. 16, the fiber sensing units 331A and 331Z both monitor the roads 10A and 10B. However, the fiber sensing unit 331A brings in pulsed light clockwise and monitors the roads 10A and 10B, and the fiber sensing unit 331Z brings in pulsed light counterclockwise and monitors the roads 10A and 10B.

Note that, when a plurality of the fiber sensing units 331 are provided as in Figs. 14 to 16, one road monitoring device 33 including the detection unit 332 may be provided for a plurality of the fiber sensing units 331. A traffic state of a vehicle on the road 10 connected to each of a plurality of the fiber sensing units 331 by the optical fiber cable 20 may be detected by one road monitoring device 33 in a concentrated way. In this case, the road monitoring device 33 may be provided inside any of the communication carrier station buildings 30, or may be provided outside the communication carrier station building 30.

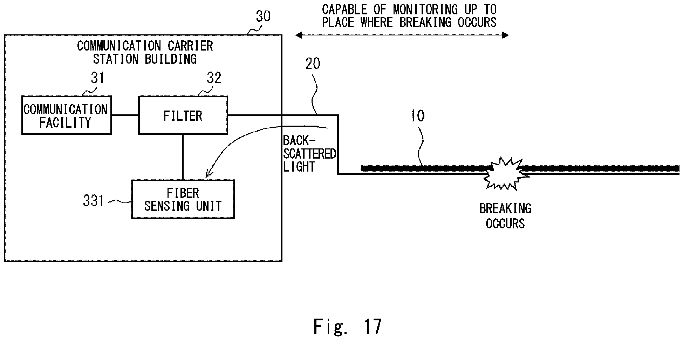

There is a possibility that the optical fiber cable 20 laid on the road 10 breaks. Thus, an operation of the fiber sensing unit 331 during breaking of the optical fiber cable 20 in the road monitoring system according to another example embodiment is described with reference to Figs. 17 to 19. Note that illustration of the detection unit 332 is omitted in Figs. 17 to 19.

The example of Fig. 17 is an example in which the optical fiber cable 20 of the road 10 is broken in the configuration of Fig. 13. The fiber sensing unit 331 keeps bringing pulsed light into the optical fiber cable 20 even when the optical fiber cable 20 is broken. This enables the communication carrier station building 30 to continuously monitor in a section up to a position where the optical fiber cable 20 is broken.

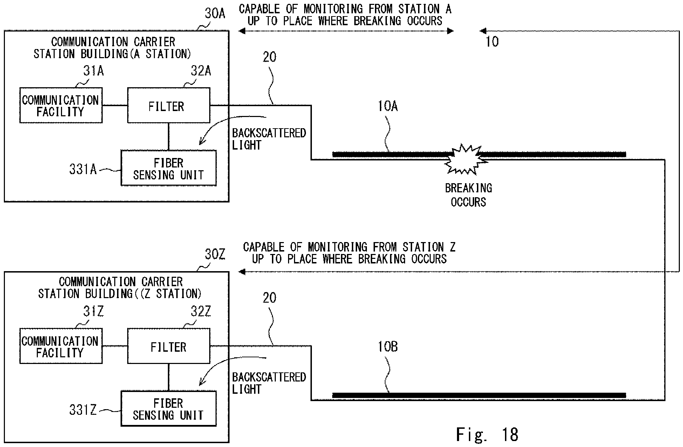

The example of Fig. 18 is an example in which the optical fiber cable 20 of the road 10A is broken in the configuration of Fig. 14. The fiber sensing units 331A and 331Z each keep bringing pulsed light into the optical fiber cable 20 even when the optical fiber cable 20 is broken. In this instance, the road 10 is always connected to two or more communication carrier station buildings 30 (in Fig. 18, two communication carrier station buildings 30A and 30Z). Thus, the communication carrier station buildings 30A and 30Z perform monitoring from two directions, thereby enabling to construct a redundant configuration that can continuously monitor the whole section in a single point of failure.

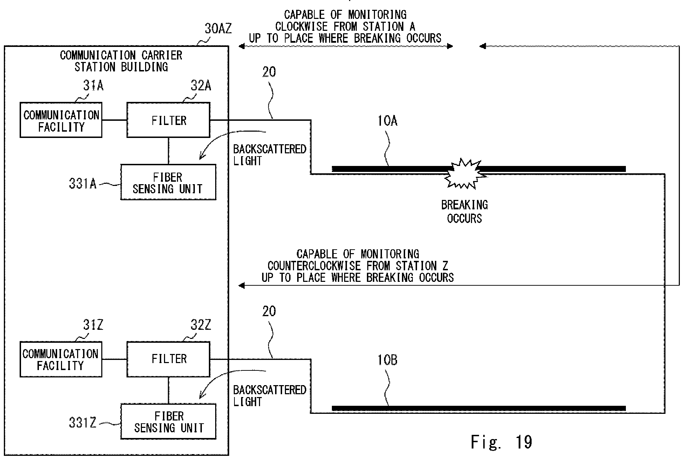

The example of Fig. 19 is an example in which the optical fiber cable 20 of the road 10A is broken in the configuration of Fig. 16. The fiber sensing units 331A and 331Z each keep bringing pulsed light into the optical fiber cable 20 even when the optical fiber cable 20 is broken. In this instance, in the example of Fig. 19, a ring configuration in which the optical fiber cable 20 is connected in a ring form is constructed. Thus, performing monitoring in two directions of a ring from one communication carrier station building 30AZ enables to construct a redundant configuration that can continuously monitor the whole section in a single point of failure.

While the present disclosure has been described above with reference to the example embodiments, the present disclosure is not limited by the above example embodiments. Various changes that may be understood by a person skilled in the art can be made to a configuration and details of the present disclosure within the scope of the present disclosure.

The whole or part of the embodiments disclosed above can be described as, but not limited to, the following supplementary notes.

### (Supplementary note 1)

A road monitoring system comprising:
a cable including a communication optical fiber, being laid on a road;
a reception unit configured to receive an optical signal from at least one communication optical fiber included in the cable; and
a detection unit configured to detect, based on the optical signal, a pattern according to a traveling state of a vehicle on the road, and detect, based on the detected pattern according to the traveling state of the vehicle on the road, a traveling state of a vehicle on the road.

### (Supplementary note 2)

The road monitoring system according to Supplementary note 1, wherein the detection unit detects, based on the optical signal, a pattern according to traveling states of a plurality of vehicles on the road, and detects, based on the detected pattern according to the traveling states of the plurality of vehicles on the road, traveling states of a plurality of vehicles on the road.

### (Supplementary note 3)

The road monitoring system according to Supplementary note 2, wherein the detection unit detects a traffic state of the road, based on the detected traveling states of the plurality of vehicles on the road.

### (Supplementary note 4)

The road monitoring system according to Supplementary note 3, further comprising a distribution unit configured to distribute information of the detected traffic state of the road to a driver of a vehicle.

### (Supplementary note 5)

A road monitoring device comprising:
a reception unit configured to receive an optical signal from at least one communication optical fiber included in a cable laid on a road; and
a detection unit configured to detect, based on the optical signal, a pattern according to a traveling state of a vehicle on the road, and detect, based on the detected pattern according to the traveling state of the vehicle on the road, a traveling state of the vehicle on the road.

### (Supplementary note 6)

The road monitoring device according to Supplementary note 5, wherein the detection unit detects, based on the optical signal, a pattern according to traveling states of a plurality of vehicles on the road, and detects, based on the detected pattern according to the traveling states of the plurality of vehicles on the road, traffic states of a plurality of vehicles on the road.

### (Supplementary note 7)

The road monitoring device according to Supplementary note 6, wherein the detection unit detects a traffic state of the road, based on the detected traveling states of the plurality of vehicles on the road.

### (Supplementary note 8)

A road monitoring method by a road monitoring device, the method comprising:
receiving an optical signal from at least one communication optical fiber included in a cable laid on a road; and
detecting, based on the optical signal, a pattern according to a traveling state of a vehicle on the road, and detecting, based on the detected pattern according to the traveling state of the vehicle on the road, a traveling state of a vehicle on the road.

### (Supplementary note 9)

A non-transitory computer-readable medium that stores a program for causing
a computer to execute:
a procedure of receiving an optical signal from at least one communication optical fiber included in a cable laid on a road; and
a procedure of detecting, based on the optical signal, a pattern according to a traveling state of a vehicle on the road, and detecting, based on the detected pattern according to the traveling state of the vehicle on the road, a traveling state of a vehicle on the road.

This application is based upon and claims the benefit of priority from Japanese Patent Application No. 2018-226684, filed on December 3, 2018, the disclosure of which is incorporated herein in its entirety by reference.

### Reference Signs List

- 10, 10A, 10B: Road
- 20: Optical fiber cable
- 30, 30A, 30Z, 30AZ: Communication carrier station building
- 31, 31A, 31Z: Communication facility
- 32, 32A, 32Z: Filter
- 33: Road monitoring device
- 331, 331A, 331Z: Fiber sensing unit
- 332: Detection unit
- 34: Data collection unit
- 40: Computer
- 401: Processor
- 402: Memory
- 403: Storage
- 404: Input/output interface
- 4041: Display device
- 4042: Input device
- 405: Communication interface
- 50: Traffic control system

## Claims

1. A road monitoring system comprising:
a cable including a communication optical fiber, being laid on a road;
a reception unit configured to receive an optical signal from at least one communication optical fiber included in the cable; and
a detection unit configured to detect, based on the optical signal, a pattern according to a traveling state of a vehicle on the road, and detect, based on the detected pattern according to the traveling state of the vehicle on the road, a traveling state of a vehicle on the road.

2. The road monitoring system according to Claim 1, wherein the detection unit detects, based on the optical signal, a pattern according to traveling states of a plurality of vehicles on the road, and detects, based on the detected pattern according to the traveling states of the plurality of vehicles on the road, traveling states of a plurality of vehicles on the road.

3. The road monitoring system according to Claim 2, wherein the detection unit detects a traffic state of the road, based on the detected traveling states of the plurality of vehicles on the road.

4. The road monitoring system according to Claim 3, further comprising a distribution unit configured to distribute information of the detected traffic state of the road to a driver of a vehicle.

5. A road monitoring device comprising:
a reception unit configured to receive an optical signal from at least one communication optical fiber included in a cable laid on a road; and
a detection unit configured to detect, based on the optical signal, a pattern according to a traveling state of a vehicle on the road, and detect, based on the detected pattern according to the traveling state of the vehicle on the road, a traveling state of the vehicle on the road.

6. The road monitoring device according to Claim 5, wherein the detection unit detects, based on the optical signal, a pattern according to traveling states of a plurality of vehicles on the road, and detects, based on the detected pattern according to the traveling states of the plurality of vehicles on the road, traffic states of a plurality of vehicles on the road.

7. The road monitoring device according to Claim 6, wherein the detection unit detects a traffic state of the road, based on the detected traveling states of the plurality of vehicles on the road.

8. A road monitoring method by a road monitoring device, the method comprising:
receiving an optical signal from at least one communication optical fiber included in a cable laid on a road; and
detecting, based on the optical signal, a pattern according to a traveling state of a vehicle on the road, and detecting, based on the detected pattern according to the traveling state of the vehicle on the road, a traveling state of a vehicle on the road.

9. A non-transitory computer-readable medium that stores a program for causing a computer to execute:
a procedure of receiving an optical signal from at least one communication optical fiber included in a cable laid on a road; and
a procedure of detecting, based on the optical signal, a pattern according to a traveling state of a vehicle on the road, and detecting, based on the detected pattern according to the traveling state of the vehicle on the road, a traveling state of a vehicle on the road.
